Europäisches Patentamt

European Patent Office

Office européen des brevets

(11) Publication number: **0 079 117**
**B1**

(12) **EUROPEAN PATENT SPECIFICATION**

(45) Date of publication of patent specification: **29.01.86**

(51) Int. Cl.⁴: **C 01 B 31/06**

(21) Application number: **82304697.4**

(22) Date of filing: **08.09.82**

(54) **Improvement in sintered diamond.**

(30) Priority: **30.10.81 US 316620**

(43) Date of publication of application:
**18.05.83 Bulletin 83/20**

(45) Publication of the grant of the patent:
**29.01.86 Bulletin 86/05**

(84) Designated Contracting States:
**AT BE CH DE FR GB IT LI NL SE**

(56) References cited:
**EP-A-0 024 757**
**DE-A-2 420 099**
**DE-B-2 533 743**
**US-A-3 850 591**
**US-A-4 220 455**
**US-A-4 288 248**

(73) Proprietor: **GENERAL ELECTRIC COMPANY**
**1 River Road**
**Schenectady New York 12305 (US)**

(72) Inventor: **Gigl, Paul Donald**
**393 Pittsfield Drive**
**Worthington Ohio 43085 (US)**
Inventor: **Bovenkerk, Harold Paul**
**622 Seabury Drive**
**Worthington Ohio 43085 (US)**

(74) Representative: **Allam, Peter Clerk et al**
**LLOYD WISE, TREGEAR & CO.**
**Norman House 105-109 Strand**
**London WC2R 0AE (GB)**

Courier Press, Leamington Spa, England.

## Description

Technical Field

This invention is related to the high pressure/-high temperature (HP/HT) process for making diamond compacts. More particularly, it is related to a modification of the HP/HT process which can result in increased yield in the production of diamond compacts made from very fine diamond powder.

Background

A compact is a polycrystalline mass of abrasive particles (e.g. diamond) bonded together to form an integral, tough, coherent, high-strength mass. A composite compact is a compact bonded to a substrate material, such as a cemented, metal carbide (e.g. cobalt cemented tungsten carbide). The metal bonded carbide mass is generally selected from the group consisting of tungsten carbide, titanium carbide, tantalum carbide and mixtures thereof with metal bonding material therein normally being present in a quantity from about 6 to 25 weight percent and selected from the group consisting of cobalt, nickel, iron and mixtures thereof. Other metal carbides can be used.

Compacts or composite compacts may be used as blanks for cutting tools, drill bits, dressing tools, and wear parts. Compacts made in a cylindrical configuration have been used to make wire drawing dies (see U.S. Patents 3,831,428; 4,129,052; and 4,144,739).

One method for manufacturing compacts involves the steps of:

A. placing within a protective shield metal enclosure which is disposed within the reaction cell of an HP/HT apparatus:

(1) a mass of diamond crystals; and

(2) a mass of catalyst metal in contact with the mass of diamond crystals; and

B. subjecting the contents of the cell to conditions of temperature, pressure and time (typically at least 50 kbar, at least 1300°C and 3—60 minutes) sufficient to give bonding between adjacent crystal grains.

The mass of catalyst metal could be in the form of a disc of one of the well known catalysts for diamond crystallization. Under the HP/HT conditions, a compaction front advances through the dense diamond or CBN material, and the catalyst metal (in liquid form) makes itself available as a catalyst or solvent for recrystallization or diamond crystal intergrowth. The terms diamond catalyst and catalyst/solvent are used interchangeably. This process is sometimes known as the sweep through method, i.e., the catalyst sweeps through the diamond mass.

The relative shapes of the abrasive mass and catalyst can be varied. For example, the mass of diamond can be cylindrical, and the catalyst can be an annular shape surrounding the cylinder of abrasive crystals or a disc on top of or below the diamond mass.

The source of catalyst may also be cemented metal carbide or carbide molding powder wherein the cementing agent is a catalyst or solvent for diamond recrystallization or growth.

The catalyst is generally selected from cobalt, nickel and iron, but can be selected from any of the known catalysts which also include ruthenium, rhodium, palladium, platinum, chromium, manganese, tantalum or mixtures of catalysts. Catalyst may be mixed with the abrasive crystals in addition to or instead of being a separate mass adjacent to the abrasive crystals.

High temperature and high pressure in the diamond stable region are applied for a time sufficient to bond the diamond crystals together. The diamond stable region is the range of pressure temperature conditions under which diamond is thermodynamically stable. On a pressure-temperature phase diagram, it is the high pressure side, above the equilibrium line between diamond and graphite. The resulting compact is characterized particularly by diamond-to-diamond bonding, i.e., bonding between adjacent grains whereby there are parts of the crystal lattice which are shared between neighboring crystal grains (resulting from recrystallization at HP/HT conditions). Methods for making diamond compacts are detailed in U.S. Patents 3,141,746; 3,745,623; 3,609,818; 3,831,428; and 3,850,591.

The manufacture of thermally stable compacts is described in U.S. Patents 4,288,248 and 4,224,380. This patent teaches the removal of substantially all of the metallic (catalyst) phase from compacts to yield a compact comprising self-bonded diamond particles with an interconnected network of pores dispersed throughout. Such compacts can withstand exposure to temperatures of about 1200°C to 1300°C without substantial thermal degradation, an advantage over the compacts of, for example, U.S. Patent 3,745,623 which are thermally degraded at a temperature of between about 700°C and 900°C. Thermal degradation is indicated by a marked loss (e.g., 50%) in physical properties, such as decreased abrasion resistance, transverse rupture strength and modulus of elasticity with increasing temperatures. The metallic or catalyst phase is removed by acid treatment, liquid zinc extraction, electrolytic depletion, or similar processes. The compacts of this type will be referred to throughout as thermally stable compacts.

Fine diamond feed material has always been difficult to sinter by the sweep through method. Generally, sintering becomes increasingly difficult as the feed material particle size decreases. One of the smaller sizes of diamond feed materials (particles having a nominal dimension of 6 microns) has been a problem for some time because its large surface area and small size causes difficulties when cleaning, handling, or loading the fine powder into a reaction cell. However, it is also known that as the grain size of diamond compacts decreases, transverse rupture strength increases, and particles of less than 10 microns in largest dimension are generally preferred. Under the high pressures (e.g. 50 kbar and greater) applied during the HP/HT process, such fine abrasive crystals compact resulting in a rather high packing density and a very fine pore structure. The resulting diamond mass, therefore, is dense and offers resistance to the percolation or sweep through of catalyst metal through the interstices.

In practice, this resistance can lead to nonuniformity of structure such as soft spots of non-bonded abrasive and other defects. In the case of diamond wire die compacts and diamond compacts without a substrate, such defects can be detected by X-ray. Radiographs or X-ray pictures of defective compacts exhibit cracks, dark spots (voids) and light spots (indicating excessive metal inclusions).

Graphite or non-diamond carbon additions to the diamond feed material are known to reduce the compression damage to the diamond crystals during HP/HT sintering. The graphite is converted to diamond at the HP/HT conditions and bonds to the diamond feed material. A strong, unitary body is made. One difficulty during mixing the carbon with the diamond is obtaining and maintaining a uniform distribution of the powders. The process of this invention overcomes this difficulty to produce a well sintered diamond compact with a fine grained structure.

DE—B—2533743 discloses a process for making diamond compacts by a different HP/HT sintering technique. According to this technique a diamond and diamond/graphite coating is applied epitaxially on diamond particles, whereafter the coated diamond particles are sintered, in the absence of catalyst metal, so that a phrase conversion occurs in the material of the coating, with the formation of substantially graphite-free diamond which serves to bond the diamond particles together. Examples are presented which show the use of this sintering technique to make relatively thick diamond compacts (about 3—4 mm) from fine-grained diamond particles (in the range 1—5 µm).

Disclosure of Invention

The improved sintering process of this invention is made possible by a step which occurs before the HP/HT process, namely non-diamond carbon coating is deposited on the diamond feed material.

More particularly, the present invention provides a process for making a polycrystalline diamond compact comprising subjecting a mass of diamond particles, which mass is in contact with a source of catalyst for diamond recrystallization, to a high pressure-high temperature process which results in a compact exhibiting diamond-to-diamond bonding, characterized in that the diamond particles used as a raw material are coated with non-diamond carbon at a level of one to ten weight percent of the diamond mass.

The deposition of the non-diamond carbon on the surface of the diamond particles can be accomplished in a number of ways, such as: vapor deposition, sputtering, back conversion, and thermal decompositions of hydrocarbons. The latter method is a convenient, simple and reproducible technique of distributing the carbon on the diamond surfaces. The coating is obtained by the thermal breakdown of natural gas to carbon and hydrogen at the surface of the diamond particles. Carbon is deposited on all of the diamond surfaces and the hydrogen is released as a gas. The coated diamond is then loaded into a normal HP/HT cell and processed in the normal manner. This technique of pretreating the diamond prior to loading into the cell improves the reliability of the manufacturing process for diamond compacts with fine diamond feed material.

The resulting compact has diamond grains in random orientation, and there is a substantial amount of diamond-to-diamond bonding. The interstices between the diamond grains are occupied by a second phase comprising the diamond catalyst.

The improved technique described herein is especially useful in making fine grain compacts at least 1 mm thick from diamond particles whose largest dimension is 10 microns or less. The resistance to the catalyst sweep through mentioned in the background section becomes more pronounced as the thickness of the compact increases. Also, when the sweep through is in a radial direction, as in the case of wire die-type compacts with an annular catalyst source surrounding the diamond mass, the technique is especially useful for diamond core diameters over 2 mm.

The invention may also be successfully applied to making compacts in a process in which the mass of diamond particles is cylindrical and is subjected to the HP/HT process while contained within a sub-assembly comprising a shield metal cup and a shield metal disc covering the open end of the cup, there being at least one catalyst disc disposed inside the shield metal cup at one end of the mass of diamond particles. Preferably, there is disposed within this sub-assembly at least one pair of discs, one being a diamond catalyst next to and at one end of the diamond particle mass, the other being a refractory metal disc next to the catalyst disc.

There is a relationship between the compact size and the micron size of the diamond raw material at which a significant yield improvement is achieved. For relatively large compacts (diamond layer about 6 mm thick) the carbon coating is of benefit when the diamond raw material has a particle size of about 20 microns or less. For smaller compacts (e.g. 2 mm thick), significant yield improvement may be achieved at particle sizes of 10 microns or less. That is, since less thickness must be traversed by the catalyst sweeping through, small grit size does not pose so great a yield problem until 10 micron grit is used. It is believed that the non-diamond carbon coating helps sweep through to some degree in most cases. When compacts are made with an annular catalyst source surrounding the diamond mass, the carbon coating would significantly improve the yield of 12 mm diameter compacts when 40 micron (and smaller) grit is used, and a marked yield improvement for 3 mm diameter compacts would not be noticed until smaller diamond (e.g. 10 micron) is used.

It is not known precisely why the use of carbon coated diamond permits the formation of thicker compacts of improved quality and consistency, but some explanations are: the added lubricity which the coating might impart, and the elimination of static charge on the particles.

The same benefit would not result from simply mixing non-diamond carbon (e.g. graphite) with the diamond to the same proportions as the coating is applied under this invention. Achievement of an ideal mixture (i.e. same proportions of diamond to non-diamond carbon throughout) through a solids blending process is very difficult, and separation can occur after the mixture is made. On the other hand, by using coated diamond, the proportions are correct and uniform from the start, and separation is impossible.

The useful non-diamond carbon coating level is from 1 to 10 weight percent of the diamond mass. The carbon is converted to diamond by the catalytic action of the catalyst metal during the sweep through and results in a fully sintered diamond-to-diamond bonded sample.

Brief Description of the Figures

Figure 1 is an X-ray radiograph showing three wire die type diamond compacts made by the improved sintering technique of this invention.

Figure 2 is an X-ray radiograph of three wire die type compacts made with the same fine diamond raw material (nominally 6 micron) as the compacts of Figure 1, but without the non-diamond carbon coating.

Best Mode for Carrying Out the Invention In the experiments by which this invention was developed, the non-diamond carbon coating, when obtained by the thermal breakdown of natural gas, has been applied in a low pressure environment as follows. The diamond sample, contained within a graphite boat is placed in an electrically heated vacuum furnace. The furnace is evacuated to less than $50 \times 10^{-3}$ torr. The temperature is raised to about 1200°C, and then natural gas is introduced into the furnace until the pressure is about 4—5 torr. At this point the temperature normally drops by about 100°—150°C as the gas enters, with power to the furnace being held constant. After the initial temperature drop, the temperature increases to about 1200°C or slightly higher. After about 5 minutes, the power is turned off, and the sample is allowed to cool. This cycle is repeated once. This method of depositing pyrolytic carbon on diamond is further described in U.S. Patent 4,220,455 at column 3, lines 37—50 and column 9, lines 7—21. Any large agglomerated pieces are lightly ground in the graphite boat or crucible.

The coating level of non-diamond carbon is from 1 to 10 weight percent of the diamond mass, normally between about 1 and 8 weight percent of the diamond mass. It is measured by the actual increase in weight of the diamond. It can also be measured by weight difference after removing the graphite coating by treating a sample of the coated diamond in an acid mixture, such as a 10:1 volume ratio mixture of boiling sulfuric and nitric acids.

One preferred form of a HP/HT apparatus in which the compacts of this invention may be prepared is the subject of U.S. Patent No. 2,941,248 which is called a belt apparatus. It includes a pair of opposed cemented tungsten carbide punches and an intermediate belt or die member of the same material. The die member includes an aperture in which there is positioned a reaction vessel shaped to contain a charge assembly. Between each punch and the die there is a gasket assembly comprising a pair of thermally insulating and electrically non-conducting pyrophyllite members and an intermediate metallic gasket.

The reaction vessel, in one preferred form, includes a hollow salt cylinder. The cylinder may be of another material, such as talc, which (1) is not converted during HP/HT operation to a stronger, stiffer state (as by phase transformation and/or compaction) and (2) is substantially free of volume discontinuities occurring under the application of high temperatures and pressures.

Positioned concentrically within and adjacent to the cylinder is a graphite electrical resistance heater tube. Within the graphite heater tube, there is concentrically positioned a cylindrical salt liner. The ends of the liner are fitted with salt plugs disposed at the top and the bottom.

Electrically conductive metal end discs are utilized at each end of the cylinder to provide electrical connection to the graphite heater tube. Adjacent to each disc is an end cap assembly each of which comprises a pyrophyllite plug or disc surrounded by an electrically conducting ring.

Operational techniques for simultaneously applying both high pressures and high temperatures in this type of apparatus are well known to those skilled in the super-pressure art. The charge (or reaction zone) assembly fits within the space defined by the salt liner and the salt plugs. The assembly is comprised of a cylindrical sleeve and end caps of shield metal selected from the group consisting of zirconium, titanium, tantalum, tungsten and molybdenum. Within the shield metal sleeve are one or more sub-assemblies each defined by a shield metal disc and a shield metal cup.

The mass of coated diamond crystals is placed within the cavity defined by the cup and the disc and the diamond is lightly tamped into the cup. This mass may also contain graphite and/or a metal catalyst. A disc of catalyst/solvent (e.g. cobalt) is usually placed on top of the abrasive crystal mass.

The number of sub-assemblies within the reaction zone can be varied and is not critical. Each sub-assembly is usually separated by a separator disc made of an inert material such as dehydrated mica or salt.

If composite compacts are desired, a mass of sintered metal bonded carbide (e.g. titanium, tungsten, or tantalum carbide) or carbide powder with appropriate metal bonding medium (e.g. cobalt, iron or nickel) would also be placed within the sub-assemblies adjacent to the diamond. This would appear as a disc or layer either on top of or underneath the diamond crystal mass. If a wire drawing die type compact is desired, the inner mass of diamond is disposed within an annulus of cold pressed sinterable metal carbide powder from which catalyst (e.g. cobalt) sweeps through radially into the diamond. The annulus may be made of fully sintered metal bonded carbide. The manufacture of composite compacts is well known, and more details may be found in U.S. Patents 3,745,623 and 3,831,428.

The charge assembly is loaded into the reaction vessel which is placed in the HP/HT belt apparatus. First, the pressure and then the temperature are increased and held at the desired conditions for sufficient time for sintering to occur. The sample is then allowed to cool under pressure for a short period of time, and finally the pressure is decreased to atmospheric pressure, and the compact is recovered.

The shield metal sleeve can be manually removed. Any adhering metal from the shield metal cup or disc can be ground or lapped off. Distortion or surface irregularity may be removed in the same manner.

After removal of any adhering cell materials from the compacts resulting from the HP/HT process, the recovered compacts comprise the polycrystalline mass of diamond grains bonded together, and the interstices between the grains are occupied by a second phase comprising the diamond catalyst/solvent. In order to make thermally stable compacts, this mass may be treated, as by acid leaching, to remove substantially all of the catalyst phase. For example, the mass could be contacted first with a hot medium comprising nitric and hydrofluoric acids (typically $1HF:1HNO_3$ volume ratio mixture of boiling concentrated acids) and contacting it subsequently with a second hot medium comprising hydrochloric and nitric acids (e.g. boiling $3HCl:1HNO_3$). Leaching times may be as long as 12 days for the first acid leaching step and as long as six days for the second. Substantially all of the catalyst/solvent material infiltrated into the compact body would be removed by this process if it were carried out for a sufficient length of time in accordance with the teaching of U.S. Patent 4,224,380. The result would be thermally stable compacts.

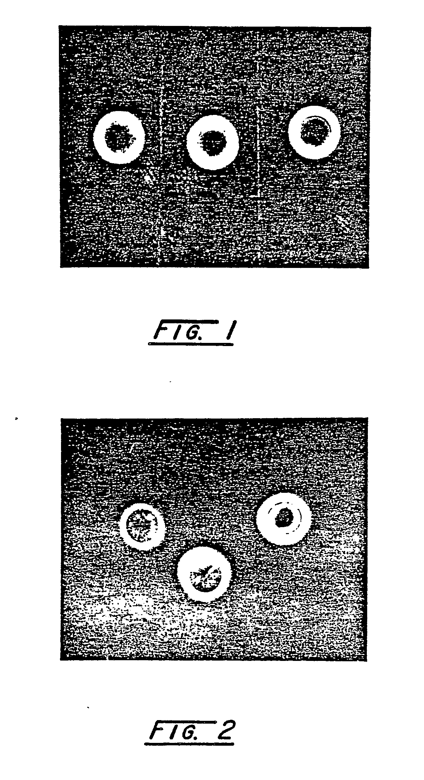

The coated fine diamond raw material has been found especially useful in making small wire die compacts (e.g., diamond core diameter of about 3.5 mm and diamond core thickness of about 2.9 mm, the core being surrounded by a cobalt cemented tungsten carbide annulus of 8.1 mm outside diameter). The treated diamond is easier to pack into the carbide annulus within the high pressure cell. In performing the old process without the improvement described herein, the yield of high quality compacts made from fine grained raw material (10 microns or less in largest dimension) was very low, virtually zero. Yield is determined by dividing the fraction of compacts which are free of any irregularities as shown by X-ray (cracks, voids or inclusions) by the total number of compacts made. The compacts X-rayed in Figure 2 are typical of those made by the old process with fine diamond (6 microns).

The experiments made in developing this invention were directed toward making wire die compacts as described above using diamond having a nominal largest dimension of about 6 microns as a raw material. The HP/HT process was run as described above, using zirconium shield metal cups and discs. Three sub-assembly types were run:

A. Sub-assemblies having two zirconium discs between the bottom of the diamond mass and the zirconium shield metal cup and also two zirconium discs between the diamond mass and the shield metal disc (which was also zirconium);

B. Sub-assemblies having cobalt discs, one on either side of the mass of diamond and metal carbide, and also zirconium discs, one between the bottom of the shield metal cup and the bottom cobalt disc and the other between the shield metal disc and the top cobalt disc; and

C. Sub-assemblies having the following content in between the shield metal disc and the bottom of the shield metal cup in the order stated: molybdenum disc, cobalt disc, annular mass of tungsten carbide containing fine diamond particles within the annulus, cobalt disc, and molybdenum disc. The thickness of the discs was about 2 mils (about 50 microns), but other thicknesses are feasible.

This last sub-assembly configuration is in accordance with the teachings of GB—A— 2 032 979. The referenced patent application teaches that yields can be improved through the use of axial catalyst diffusion (i.e., axially relative to the cylindrical diamond mass) in the HP/HT process. Axial diffusion, developed originally for manufacturing wire die type compacts with a surrounding metal carbide annulus, is accomplished by placing within the sub-assembly on one end of the cylindrical diamond mass a catalyst disc. In a preferred embodiment, there is also a refractory metal disc on the side of the catalyst disc opposite the diamond particle mass.

A yield improvement was obtained in all cases in which the non-diamond carbon coated diamond raw material was used, but the type C sub-assembly gave the best results. In one set of experiments in which the level of non-diamond carbon coating was 2.6 per cent and 5.1 per cent by weight, and using the type C sub-assemblies, over ninety per cent yield was obtained. 70 to 90 per cent yield was common when using this improved process. The compacts X-rayed in Figure 1 are typical of these.

## Claims

1. A process for making a polycrystalline diamond compact comprising subjecting a mass of diamond particles, which mass is in contact with a source of catalyst for diamond recrystallization, to a high pressure-high temperature process which results in a compact exhibiting diamond-to-diamond bonding, characterized in that the diamond particles used as a raw material are coated with non-diamond carbon at a level of one to ten weight percent of the diamond mass.

2. The process of Claim 1 characterized in that the thickness of the polycrystalline diamond of the compact is at least 1 millimeter and the diamond particles have a largest dimension of 10 microns or less.

3. The process of Claim 2 characterized in that the diamond particle mass is cylindrical and a catalyst source surrounds the perimeter wherein the cylinder diameter is at least 2 millimeters.

4. The process of Claim 1 or Claim 2 characterized in that the mass of diamond particles is cylindrical and is subjected to the high pressure-high temperature process while contained within a sub-assembly comprising a shield metal cup and a shield metal disc covering the open end of the cup; and there is at least one catalyst disc disposed inside the shield metal cup at one end of the mass of diamond particles.

5. The process of Claim 4 characterized in that there is disposed within the sub-assembly at least one pair of discs, one being a diamond catalyst next to and at one end of the diamond particle mass, the other being a refractory metal disc next to the catalyst disc.

6. The process of any preceding claim, characterized by removing substantially all of the catalyst phase from the compacts.

7. The process of Claim 6, characterized in that the removal of the catalyst phase is accomplished by acid leaching.

8. The process of Claim 7, characterized in that the acid leaching comprises contacting the compact with a first hot medium comprising a hydrofluoric and nitric acid mixture followed by contacting the compact with a second medium comprising a hydrochloric and nitric acid mixture.

## Patentansprüche

1. Verfahren zur Herstellung eines polykristallinen Diamant-Preßlings, wobei eine Masse von Diamantteilchen, die mit einer Katalysatorquelle für Diamantrekristallisation in Kontakt steht, einem Hochdruck-Hochtemperatur-Verfahren, welches einen Diamant-zu-Diamant-Bindung aufweisenden Preßling liefert, unterworfen wird, dadurch gekennzeichnet, daß die als Rohmaterial eingesetzten Diamantteilchen mit einem Nicht-Diamant-Kohlenstoff in einer Größenordnung von 1 bis 10 Gewichtsprozent der Diamantmasse beschichtet sind.

2. Verfahren nach Anspruch 1, dadurch gekennzeichnet, daß die Dicke des polykristallinen Diamanten des Preßlings zumindest 1 Millimeter beträgt und die Diamantteilchen eine größte Dimension von 10 µm (10 Mikron) oder kleiner aufweisen.

3. Verfahren nach Anspruch 2, dadurch gekennzeichnet, daß die Diamantteilchenmasse zylindrisch ist und der Umfang von einer Katalysatorquelle umgeben wird, worin der Zylinderdurchmesser zumindest 2 Millimeter beträgt.

4. Verfahren nach einem der Ansprüche 1 und 2, dadurch gekennzeichnet, daß die Masse der Diamantteilchen zylindrisch ist und dem Hochdruck-Hochtemperatur-Verfahren unterworfen wird, während sie innerhalb einer sekundären Einrichtung, bestehend aus einer Abschirmmetallschale und einer Abschirmmetallscheibe, welche das offene Ende der Schale bedeckt, gehalten wird, wobei zumindest eine, innerhalb der Abschirmmetallschale an einem Ende der Diamantteilchenmasse angeordnete Katalysatorscheibe vorhanden ist.

5. Verfahren nach Anspruch 4, dadurch gekennzeichnet, daß innerhalb der sekundären Einrichtung zumindest ein Paar Scheiben angeordnet sind, von denen die eine ein Diamantkatalysator ist, die nahe bei und an einem Ende der Diamantteilchenmasse liegt und die andere eine schwerschmelzbare Metallscheibe nahe der Katalysatorscheibe ist.

6. Verfahren nach einem der Ansprüche 1 bis 5, dadurch gekennzeichnet, daß man im wesentlichen die gesamte Katalysatorphase aus den Preßlingen entfernt.

7. Verfahren nach Anspruch 6, dadurch gekennzeichnet, daß die Entfernung der Katalysatorphase durch Auslaugen mit Säure durchgeführt wird.

8. Verfahren nach Anspruch 7, dadurch gekennzeichnet, daß das Auslaugen mit Säure das In-Berührung-bringen des Preßlings mit einem ersten heißen Medium, enthaltend eine Mischung von Fluorwasserstoffsäure und Salpetersäure, gefolgt vom In-Berührung-bringen des Preßlings mit einem zweiten Medium, enthaltend eine Mischung von Chlorwasserstoffsäure und Salpetersäure, umfaßt.

## Revendications

1. Procédé de fabrication d'un comprimé de diamant polycristallin consistant à soumettre une masse de particules de diamant, masse se trouvant en contact avec une source de catalyseur pour la recristallisation du diamant, à un procédé haute-pression/haute température qui a pour résultat un comprimé à liaison diamant-diamant, caractérisé en ce que l'on recouvre les particules de diamant utilisées comme matière première avec du carbone qui n'est pas sous la forme diamant, en une quantité de 1 à 10 pour cent en poids de la masse de diamant.

2. Procédé selon la revendication 1, caractérisé en ce que l'épaisseur du diamant polycristallin du comprimé est au moins de 1 millimètre et en ce que les particules de diamant présentent dans leur plus grande dimension, une taille de 10 micromètres ou moins.

3. Procédé selon la revendication 2, caractérisé en ce que la masse de particules de diamant est cylindrique et en ce qu'une source de catalyseur l'entoure sur son périmètre, le diamètre du cylindre étant d'au moins 2 millimètres.

4. Procédé selon la revendication 1 ou la revendication 2, caractérisé en ce que la masse de particules de diamant est cylindrique, en ce qu'on la soumet au procédé haute-pression/haute température alors qu'elle est contenue dans un sous-montage comprenant une coupelle métallique protectrice et un disque métallique protecteur recouvrant l'extrémité ouverte de la coupelle; et en ce qu'au moins un disque de catalyseur est placé à l'intérieur de la coupelle métallique protectrice à une des extrémités de la masse de particules de diamant.

5. Procédé selon la revendication 4, caractérisé en ce qu'au moins une paire de disques est placée à l'intérieur du sous-montage, dont l'un est un catalyseur pour le diamant et se trouve à une extrémité de la masse de particules de diamant et immédiatement à côté de celle-ci; et l'autre un disque de métal réfractaire se trouvant immédiatement à côté du disque de catalyseur.

6. Procédé selon l'une quelconque des revendications précédentes, caractérisé en ce qu'on enlève pratiquement toute la phase catalyseur des comprimés.

7. Procédé selon la revendication 6, caractérisé en ce que l'on enlève la phase catalytique par lixiviation acide.

8. Procédé selon la revendication 7, caractérisé en ce que la lixiviation acide consiste à mettre le comprimé en contact avec un premier milieu chaud comprenant un mélange d'acides fluorhydrique et nitrique, puis à mettre le comprimé en contact avec un second milieu comprenant un mélange d'acides chlorhydrique et nitrique.

FIG. 1

FIG. 2